# EUROPEAN PATENT APPLICATION

(11) **EP 2 333 165 A1**
(43) Date of publication of application: **15.06.2011**
(21) Application number: 10193437.0
(22) Date of filing: 02.12.2010
(51) Int. Cl.: E02F 9/12, B66C 23/84, F16N 11/00

(54) **Construction equipment having grease injection device within cab**

(30) Priority: 03.12.2009 KR 20090118966
(71) Applicant: Volvo Construction Equipment Holding Sweden AB, 631 85 Eskilstuna (SE)
(72) Inventor: Yoon, Chun Jin, 641-180 Changwon-si (KR)
(74) Representative: Zimmermann, Tankred Klaus

(57) **Abstract**

Construction equipment having a grease injection device within a cab (3) is provided, which can supply lubricating grease to a rolling contact portion between an outer ring (13) and an inner ring (14) of a swing device using a grease gun within the cab. The construction equipment includes a lower driving structure (1); an upper swing structure (2) including a body frame (22) and a bottom plate (23); a swing device (19) that makes the upper swing structure swing against the lower driving structure by an outer ring fixed to the body frame and an inner ring having an inner ring gear formed on an inner side surface of the inner ring; a cab (3) and an engine room (4) mounted on the upper swing structure; a working device (11) including a boom (6), an arm (8), and a bucket (10); a counter weight (12) mounted on the rear of the upper swing structure; and a grease injection device including a grease injection nipple (25) fixed to a predetermined position of the bottom plate (23) inside the cab (3), a pipe (26) having one end that communicates with the grease injection nipple to move grease, and paths (27,28) that communicate with the other end of the pipe (26) to supply the grease, which moves through the pipe, to a rolling contact portion between the outer ring (13) and the inner ring (14).

## Description

### CROSS-REFERENCE TO RELATED APPLICATION

This application is based on and claims priority from Korean Patent Application No. 10-2009-118966, filed on December 03, 2010 in the Korean Intellectual Property Office, the disclosure of which is incorporated herein in its entirety by reference.

### BACKGROUND OF THE INVENTION

### Field of the invention

The present invention relates to the supply of grease to a drive portion of a swing device within a cab, and more particularly to construction equipment having a grease injection device within a cab, which can supply lubricating grease to a rolling contact portion between an outer ring and an inner ring of a swing device using a grease gun within the cab.

### Description of the Prior Art

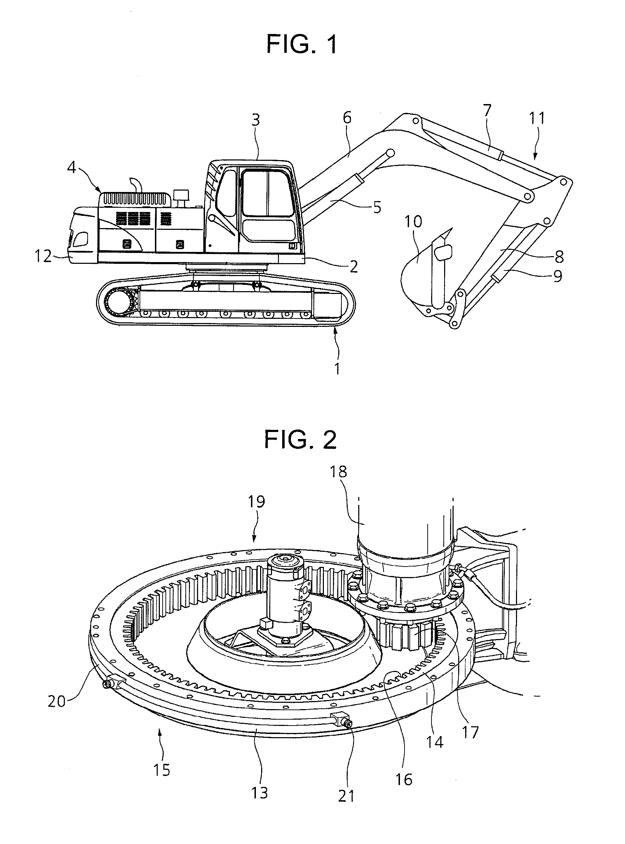

Construction equipment to which the present invention is applied, as illustrated in FIG. 1, includes a lower driving structure 1; an upper swing structure 2 mounted on the lower driving structure 1 to be swiveled; a cap 3 and an engine room 4 mounted on the upper swing structure 2; a working device 11 including a boom 6 rotatably fixed to the upper swing structure 2 to be driven by a boom cylinder 6, an arm 8 connected to the boom 6 to be driven by an arm cylinder 7, and a bucket 10 connected to the arm 8 to be driven by a bucket cylinder 9; and a counter weight 12 mounted on the rear of the upper swing structure 2.

A grease injection device mounted on construction equipment in the related art, as illustrated in FIG. 2, includes a swing device 19 including a swing bearing 15 provided with an outer ring 13 fixed to the upper swing structure 2 and an inner ring 14 fixed to a lower frame, and a swing motor 18 that makes the upper swing structure 2 swing against the lower driving structure 1 through a pinion gear 17 tooth-engaged with an inner ring gear 16 of the inner ring 14; a metal pipe 20 fixed to an outer side surface of the outer ring 13; and a grease injection nipple 21 that communicates with the pipe 20 and supplies grease injected from the outside through a grease gun (not illustrated) to a driving portion (i.e. a rolling contact portion between the inner ring and the outer ring) of the swing device.

If an assembled position of the grease injection nipple 21 installed on the outer side surface of the outer ring 13 is kept in a direction opposite to the traveling direction of the construction equipment in the case where the lubricating grease is supplied to the driving portion of the swing device 19 using the grease injection device as described above, an operator should go down below the body of the upper swing structure 2 to inject the grease into the driving portion of the swing device 19.

Also, in the case of injecting grease in the cold winter season, in the summer season under the glaring sun, or in a work place where large amounts of fine particles or dust are generated, an operator should get out of the cab and inject the grease by coupling the grease gun to the grease injection nipple 21 installed on the swing device 19, thereby causing great inconvenience in use.

Also, since the grease injection nipple 21 and the pipe 20 are exposed to the outside, they may be easily damaged due to collision with external objects in an inferior work environment, and this causes the increase of the cost of the grease injection device.

### SUMMARY OF THE INVENTION

Accordingly, the present invention has been made to solve the above-mentioned problems occurring in the prior art while advantages achieved by the prior art are maintained intact.

An embodiment of the present invention relates to construction equipment having a grease injection device within a cab, which can supply lubricating grease to a swing device driving portion using a grease gun coupled to a grease nipple installed inside the cab.

An embodiment of the present invention relates to construction equipment having a grease injection device within a cab, which can supply grease without being exposed to weather conditions or a pollution source in the surrounding environment of a work place and regardless of the traveling direction of the construction equipment.

An embodiment of the present invention relates to construction equipment having a grease injection device within a cab, which does not expose the grease injection device to the outside and thus can prevent the damage of the grease injection device.

In one aspect of the present invention, there is provided construction equipment, which includes a lower driving structure; an upper swing structure including a body frame mounted on the lower driving structure to be swiveled and a bottom plate mounted on the body frame; a swing device that makes the upper swing structure swing against the lower driving structure by an outer ring fixed to the body frame and an inner ring having an inner ring gear formed on an inner side surface of the inner ring, the inner ring gear being tooth-engaged with a pinion gear of a swing motor to make the upper swing structure swing; a cap and an engine room mounted on the upper swing structure; a working device including a boom rotatably fixed to the upper swing structure to be driven by a boom cylinder, an arm connected to the boom to be driven by an arm cylinder, and a bucket connected to the arm to be driven by a bucket cylinder; a counter weight mounted on the rear of the upper swing structure; and a grease injection device including a grease injection nipple fixed to a predetermined position of the bottom plate inside the cab, a pipe having one end that communicates with the grease injection nipple to move grease, and paths that communicate with the other end of the pipe to supply the grease, which moves through the pipe, to a rolling contact portion between the outer ring and the inner ring.

The construction equipment according to a preferred embodiment of the invention may further include a first connector mounted on a bottom surface of the bottom plate to connect the one end of the pipe that is positioned below the bottom plate to the grease injection nipple so that the pipe communicates with the grease injection nipple, and a second connector mounted on an upper surface of the body frame to connect the other end of the pipe to the paths formed on the body frame and the outer ring, respectively, so that the pipe communicates with the paths.

With the above-described construction, the construction equipment having the grease injection device within the cab as constructed above according to an embodiment of the invention has the following advantages.

The lubricating grease is supplied to the swing device driving portion using the grease gun coupled to the grease nipple installed inside the cab, and thus the durability of the corresponding components can be increased.

The operator can inject the grease in a comfortable posture without being exposed to weather conditions or a pollution source in the surrounding environment of a work place and regardless of the traveling direction of the construction equipment, and thus the operator's convenience can be served.

Also, since the grease injection pipe and nipple are not exposed to the outside, the damage of the grease injection device is prevented during working in an inferior work environment, and thus the cost of the grease injection device can be reduced.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic view of construction equipment to which the present invention is applied;
FIG. 2 is a schematic view of a grease injection device mounted on a swing device of construction equipment in the related art;
FIG. 3 is a sectional view of a main part extracted from a cab region in construction equipment having a grease injection device within a cab according to an embodiment of the invention;
FIG. 4 is a sectional view of a main part extracted from a swing device region in construction equipment having a grease injection device within a cab according to an embodiment of the invention;
FIG. 5 is a view illustrating a use state of construction equipment having a grease injection device within a cab according to an embodiment of the invention; and
FIG. 6 is a schematic perspective view of the swing device region as illustrated in FIG. 4.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

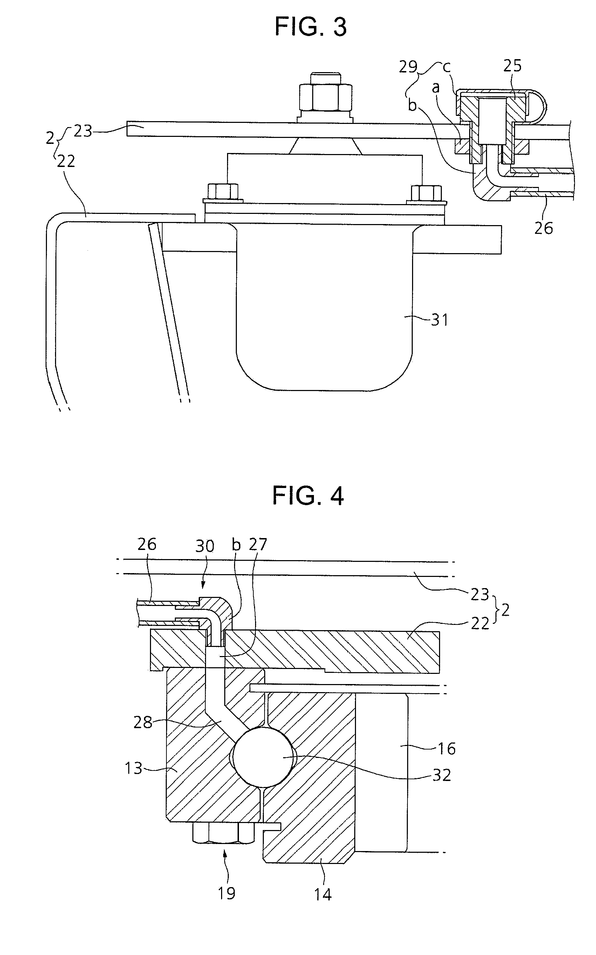

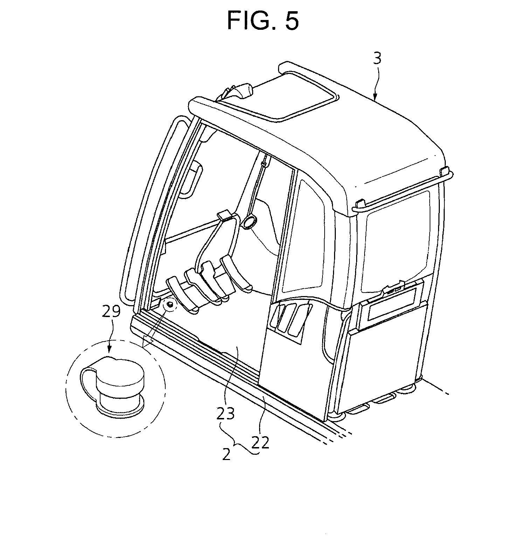

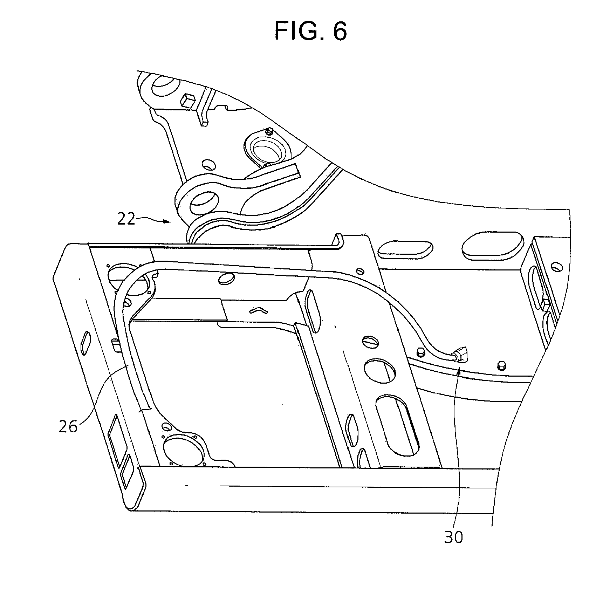

As illustrated in FIGS. 3 to 6, construction equipment having a grease injection device within a cab according to an embodiment of the invention includes a lower driving structure 1; an upper swing structure 2 including a body frame 22 mounted on the lower driving structure 1 to be swiveled and a bottom plate 23 mounted on the body frame 22; a swing device 19 that makes the upper swing structure 2 swing against the lower driving structure 1 by an outer ring13 fixed to the body frame 22 and an inner ring 14 having an inner ring gear 16 formed on an inner side surface of the inner ring 14, the inner ring gear 16 being tooth-engaged with a pinion gear 17 of a swing motor 18 to make the upper swing structure 2 swing; a cap 3 and an engine room 4 mounted on the upper swing structure 2; a working device 11 including a boom 6 rotatably fixed to the upper swing structure 2 to be driven by a boom cylinder 5, an arm 8 connected to the boom 6 to be driven by an arm cylinder 7, and a bucket 10 connected to the arm 8 to be driven by a bucket cylinder 9; a counter weight 12 mounted on the rear of the upper swing structure 2; and a grease injection device including a grease injection nipple 25 fixed to a predetermined position of the bottom plate 23 inside the cab 3, a pipe 26 having one end that communicates with the grease injection nipple 25 to move grease, and paths 27 and 28 that communicate with the other end of the pipe 26 to supply the grease, which moves through the pipe 26, to a rolling contact portion between the outer ring 13 and the inner ring 14.

The construction equipment according to a preferred embodiment of the invention further includes a first connector 29 (e.g. a nut a that fixes the grease injection nipple 25 to the bottom plate 23 and an elbow b that connects the pipe 26 to the grease injection nipple 25) mounted on a bottom surface of the bottom plate 23 to connect the one end of the pipe 26 that is positioned below the bottom plate 23 to the grease injection nipple 25 so that the pipe 26 communicates with the grease injection nipple 25, and a second connector 30 (e.g. an elbow b that fixes the pipe 26 to the body frame 22) mounted on an upper surface of the body frame 22 to connect the other end of the pipe 26 to the paths 27 and 28 formed on the body frame 22 and the outer ring 13, respectively, so that the pipe 26 communicates with the paths 27 and 28.

In the drawing, the unexplained reference numeral 31 is a vibration absorption device mounted on the body frame 22 to prevent impact or the like generated from the lower driving structure 1 from being transferred to the cab 3 through the bottom plate 23, and 32 is a ball bearing inserted into the rolling contact portion between the inner ring 14 and the outer ring 13.

In this case, since the construction, except for the grease injection device including the grease injection nipple 25 installed inside the cab 3, the pipe 26 that moves the grease injected through the grease injection nipple 25, and the paths 27 and 28 that supply the grease to the driving portion of the swing device 19, is substantially the same as the construction of the construction equipment as illustrated in FIGS. 1 and 2, the detailed explanation of the construction and operation thereof will be omitted. The same reference numerals are used for the same elements across the figures.

Hereinafter, the use example of the construction equipment having the grease injection device within the cab according to an embodiment of the invention will be described with reference to the accompanying drawings.

As illustrated in FIGS. 3 to 5, the grease injection nipple 25 is installed in a predetermined front position within the cab 3 by the first connector 29. That is, the grease injection nipple 25 that is coupled to the bottom plate 23 is fixed by the nut a, and the pipe 26 is connected to the elbow b that is coupled to the grease injection nipple 25.

The predetermined position of the nipple 25 means a position in which an operator is not interfered with the grease injection nipple 25 when the operator gets in or gets out of the cab 3 or when the operator manipulates a pedal (e.g. a driving pedal or an option device pedal) mounted on the front portion within the cab 3.

On the other hand, the other end of the pipe 26 for supplying the grease injected through the grease injection nipple 25 to the rolling contact portion between the outer ring 13 and the inner ring 14 of the swing device 19 is installed on the body frame 22 by the second connector 30. That is, the pipe 26 is connected to the path 27 formed in the body frame 22 by the elbow b coupled to the body frame 22.

Accordingly, the operator can supply the grease to the rolling contact portion between the inner ring 14 and the outer ring 13 of the swing device 19 using the grease gun, without seceding from the cab 3. That is, the grease can be injected by coupling the grease gun to the grease injection nipple 25 after opening a lid c of the grease injection nipple 25 installed in front of the bottom plate 23 within the cab 3.

Accordingly, the grease injected through the grease injection ripple 25 moves along the pipe 26 installed between the bottom plate 23 and the body frame 22, and is supplied to the coupling portion of the ball bearing 32 via the second connector 30 installed on the upper surface of the body frame 22, the path 27 formed on the body frame 22, and the path 28 formed on the outer ring 13 in order.

As described above, since the operator injects the grease into the rolling contact portion between the outer ring 13 and the inner ring 14 of the swing device within the cab 3, the operator can be protected from the inferior work environment where fine particles and so on are generated or various kinds of pollution sources (in the related art, the operator secedes from the cab to inject the grease into the driving portion of the swing device, and thus the operator's body is exposed to the inferior work environment).

Also, since the operator can supply the grease into the driving portion of the swing device 19 within the cab 3 regardless of the traveling direction of the construction equipment and can inject the grease in a comfortable posture, the operator's convenience can be served (in the related art, if the grease injection nipple is positioned in a direction opposite to the traveling direction of the construction equipment, the operator should go down below the upper swing structure to manipulate the grease gun coupled to the grease injection nipple installed on the swing device).

Also, since the pipe 26 and the grease injection nipple 25 for injecting the grease are mounted inside the construction equipment, they are prevented from being damaged while the construction equipment operates in an inferior work environment (in the related art, the grease injection device is exposed to the inferior work environment, and thus may be easily damaged due to collision with external objects while the construction equipment operates).

Although preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. Construction equipment comprising:
a lower driving structure;
an upper swing structure including a body frame mounted on the lower driving structure to be swiveled and a bottom plate mounted on the body frame;
a swing device that makes the upper swing structure swing against the lower driving structure by an outer ring fixed to the body frame and an inner ring having an inner ring gear formed on an inner side surface of the inner ring, the inner ring gear being tooth-engaged with a pinion gear of a swing motor to make the upper swing structure swing;
a cap and an engine room mounted on the upper swing structure;
a working device including a boom rotatably fixed to the upper swing structure to be driven by a boom cylinder, an arm connected to the boom to be driven by an arm cylinder, and a bucket connected to the arm to be driven by a bucket cylinder;
a counter weight mounted on the rear of the upper swing structure; and
a grease injection device including a grease injection nipple fixed to a predetermined position of the bottom plate inside the cab, a pipe having one end that communicates with the grease injection nipple to move grease, and paths that communicate with the other end of the pipe to supply the grease, which moves through the pipe, to a rolling contact portion between the outer ring and the inner ring.

2. The construction equipment according to claim 1, further comprising:
a first connector mounted on a bottom surface of the bottom plate to connect the one end of the pipe that is positioned below the bottom plate to the grease injection nipple so that the pipe communicates with the grease injection nipple; and
a second connector mounted on an upper surface of the body frame to connect the other end of the pipe to the paths formed on the body frame and the outer ring, respectively, so that the pipe communicates with the paths.
